# EUROPEAN PATENT APPLICATION

(11) **EP 4 170 838 A1**
(43) Date of publication of application: **26.04.2023**
(21) Application number: 22181905.5
(22) Date of filing: 29.06.2022
(51) Int. Cl.: H02G 1/12, B26B 29/02

(54) **WIRE STRIPPING AND CUTTING TOOL**

(30) Priority: 08.07.2021 US 202163219735 P
(71) Applicant: Techtronic Cordless GP, Anderson, SC 29621 (US)
(72) Inventor: JENKINS, J. Luke, Anderson, 29621 (US)
(74) Representative: Novagraaf Group

(57) **Abstract**

A wire stripping and cutting tool includes a main body, a non-conductive knife blade extending from the main body, and a blade guard coupled to the main body. The blade guard is movable relative to the main body and includes a plurality of holes. Each of the plurality of holes has a different diameter.

## Description

### CROSS-REFERENCE TO RELATED APPLICATION

This application claims priority to U.S. Provisional Patent Application No. 63/219,735, filed July 8, 2021, the entire contents of which are incorporated by reference herein.

### TECHNICAL FIELD

The present disclosure relates to hand tools, and more particularly to wire stripping and cutting tools.

### SUMMARY

Wire strippers are used to strip a casing from a conductive wire. A wire stripping and cutting tool may include a straight edge to severe the wire to a desired length.

In one independent aspect, a wire stripping and cutting tool includes wire stripping and cutting tool includes a main body, a non-conductive knife blade extending from the main body, and a blade guard coupled to the main body. The blade guard is movable relative to the main body and includes a plurality of holes. Each of the plurality of holes has a different diameter.

In another independent aspect, a wire stripping and cutting tool includes a main body having a blade guard, a non-conductive knife blade extending from the main body, and a blade guard coupled to the main body. The blade guard is movable relative to the main body and includes a longitudinal slot configured to receive the knife blade.

In another independent aspect, a wire stripping and cutting tool includes a main body, a non-conductive knife blade extending from the main body, and a blade guard pivotally coupled to the main body and rotatable between a stow position, an open position, and a cover position.

Other features and aspects will become apparent by consideration of the following detailed description and accompanying drawings.

### BRIEF DESCRIPTION OF THE DRAWINGS

FIG. 1 is side view of a wire stripping and cutting tool, illustrating a blade guard in a stow position.
FIG. 2 is a side view of the wire stripping and cutting tool of FIG. 1, illustrating the blade guard in an open position.
FIG. 3 is a perspective view of the wire stripping and cutting tool of FIG. 2, illustrating the blade guard in the open position and receiving a wire.

### DETAILED DESCRIPTION

Before any embodiments are explained in detail, it is to be understood that the invention is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, whether direct or indirect.

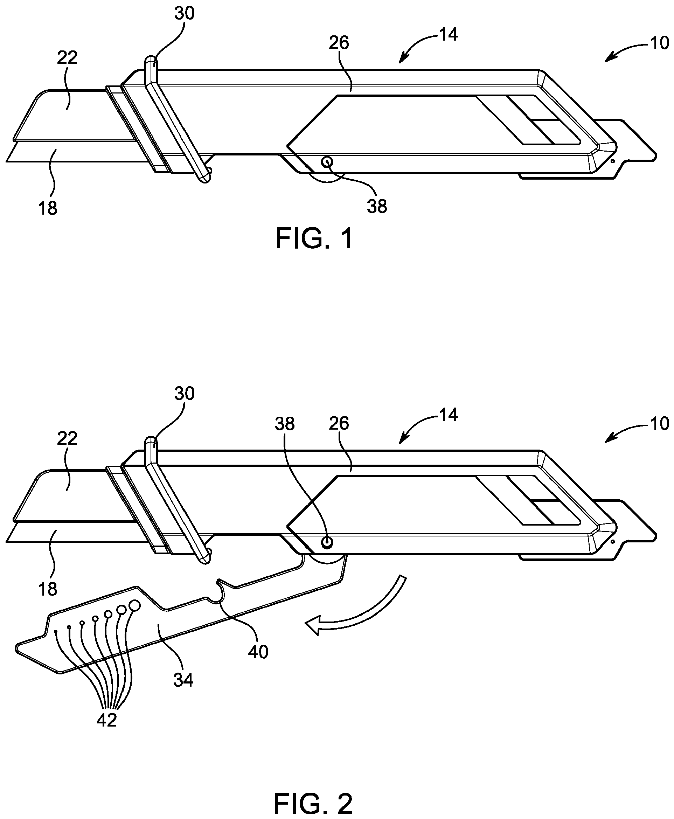

FIGS. 1-3 illustrate an exemplary wire stripping and cutting tool 10. As shown in FIG. 1, the wire stripping and cutting tool 10 includes a main body 14, a knife blade 18 extending forward from the main body 14, and a blade housing 22 extending forward from the main body 14 and surrounding at least a portion of the knife blade 18. The main body 14 has a gripping portion 26 for a user to grasp the main body 14 when maneuvering and using the wire stripping and cutting tool 10. The gripping portion 26 may include, for example, ribs, protrusions, materials, or other features that facilitate gripping. In the illustrated embodiment, the main body 14 also includes a shield 30 that is disposed between the gripping portion 26 and the knife blade 18. The shield 30 includes a region or regions that protrudes outwardly from an end of the gripping portion 26 (e.g., laterally) and extends (e.g., circumferentially) at least partially around the gripping portion 26. The shield 30 enables a user to rest at least a portion of the user's hand against the shield 30 while using the wire stripping and cutting tool 10. The shield 30 also avoids inadvertent slippage of the user's hand toward the knife blade 18.

As shown in FIG. 2, the wire stripping and cutting tool 10 further includes a blade guard 34. In the illustrated embodiment, the blade guard 34 is pivotably coupled to the main body 14 about a pin 38. The pin 38 is adjacent (e.g., below) the gripping portion 26, and the blade guard 34 includes a notch 40 to accommodate the shield 30. The blade guard 34 is moveable between a stow position, a cover position, and an open position. In the stow position (FIG. 1), the blade guard 34 is positioned (e.g., entirely) within the main body 14 and may be held and/or secured in the main body 14. In the cover position (not shown), the blade guard 34 is pivoted out of the main body 14 (e.g., clockwise), and the blade guard 34 abuts the blade housing 22 and/or covers at least a portion of the knife blade 18. In the open position (FIG. 2), the blade guard 34 is positioned rotationally between the stow position and the cover position and does not cover the knife blade 18. In some embodiments, the blade guard 34 may be rotated for example 180 degrees between the stow position and the cover position, or between 170 degrees and 190 degrees. In some embodiments, the blade guard 34 may be rotated for example less than 180 degrees (e.g., between 150 and 170 degrees) between the stow position and the open position illustrated in FIG. 2.

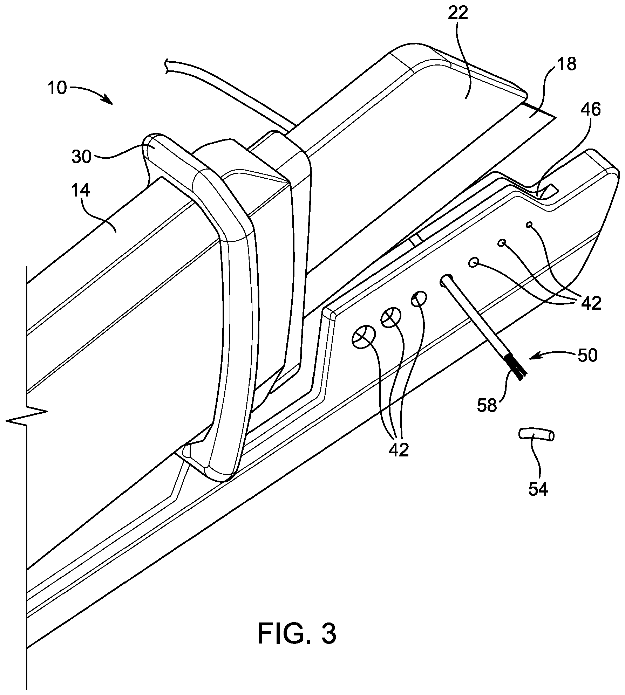

As illustrated in FIG. 3, the blade guard 34 includes a slot 46 (e.g., longitudinal slot) for receiving the knife blade 18, and a plurality of holes 42 (e.g., through holes) extending transversely to the slot 46 and through at least a portion of the blade guard 34 (e.g., through the blade guard 34 on either side of the slot 46). In the illustrated embodiment, the plurality of holes 42 each have a different diameter that increments in size from a largest diameter to a smallest diameter (e.g., moving toward a distal end of the knife blade 18). Other embodiments may include different numbers and arrangements of holes 42 than that illustrated, including arrangements where the sizes of the holes 42 increase in an opposite direction than that illustrated. As illustrated in FIG. 3, each of the plurality of holes 42 is sized and shaped to receive a different sized wire 50, such that each wire 50 fits for example within one of the plurality of holes 42 with a minimal clearance between a periphery of the hole 42 and an outer casing 54 of the wire 50.

With continued reference to FIG. 3, in the illustrated embodiment the knife blade 18 is composed of a non-conductive material to avoid conducting electricity to any part of the wire stripping and cutting tool 10. In some embodiments, the wire 50 may be inadvertently carrying an electrical charge in conductive wire elements 58 within or otherwise forming part of the wire 50. Because the knife blade 18 is composed of a non-conductive material, an electrical charge cannot be transmitted through the wire stripping and cutting tool 10 when the knife blade 18 contacts the conductive wire elements 58. The non-conductive material may, for example, be a plastic, a ceramic, a non-conductive metal, or other similar type of material that is non-conductive.

In operation, a user may grip the gripping portion 26 with one hand and move (e.g., rotate) the blade guard 34 with the other hand from the cover position to the open position to expose the knife blade 18. The wire 50 may be inserted into one of the holes 42 having a diameter to accommodate the wire 50. The blade guard 34 is then moved toward the cover position until the outer casing 54 contacts the cutting edge of the knife blade 18 to sever a portion of the outer casing 54. The wire 50 may then be rotated within the hole 42 to make a circumferential cut through the outer casing 54 around the entire wire 50. With the knife blade 18 still in contact with a portion of the outer casing 54, the wire 50 may be pulled out of the hole 42 with sufficient force to cause the cut portion of the outer casing 54 to be removed and stripped, thereby exposing the conductive wire elements 58.

Once the outer casing 54 is removed, the user may desire to cut the wire 50 to length. The blade guard 34 may be moved from the open position to the stow position to move the blade guard 34 out of the way and fully expose the knife blade 18, and the wire 50 may be cut to a desired length. In some scenarios, the wire 50 may be cut to length first, and the portion of the outer casing 54 may then be removed thereafter.

Although the disclosure has been described in detail with reference to certain embodiments, variations and modifications exist within the scope and spirit of one or more independent aspects as described.

## Claims

1. A wire stripping and cutting tool comprising:
a main body;
a non-conductive knife blade extending from the main body; and
a blade guard coupled to the main body, wherein the blade guard is movable relative to the main body and includes a plurality of holes, wherein each of the plurality of holes has a different diameter.

2. The wire stripping and cutting tool of claim 1, wherein the main body includes a gripping portion for a user to grip the main body when maneuvering and using the wire stripping and cutting tool.

3. The wire stripping and cutting tool of claim 2, wherein the main body includes a shield disposed between the gripping portion and the knife blade.

4. The wire stripping and cutting tool of claim 3, wherein a region of the shield protrudes outwardly from an end of the gripping portion and extends at least partially around the gripping portion.

5. The wire stripping and cutting tool of claim 1, further comprising a blade housing extending forward from the main body and surrounding at least a portion of the knife blade.

6. The wire stripping and cutting tool of claim 1, wherein the blade guard is pivotally coupled to the main body.

7. The wire stripping and cutting tool of claim 6, wherein the blade guard is rotatable between a stow position, an open position, and a cover position.

8. The wire stripping and cutting tool of claim 7, wherein the open position is rotationally between the stow position and the cover position.

9. The wire stripping and cutting tool of claim 7, wherein the blade guard is positioned at least partially within the main body when in the stow position, and wherein the blade guard covers at least a portion of the knife blade in the cover position.

10. The wire stripping and cutting tool of claim 1, wherein the blade guard includes a longitudinal slot, and wherein each of the plurality of holes extends transversely to the longitudinal slot.

11. A wire stripping and cutting tool comprising:
a main body;
a non-conductive knife blade extending from the main body; and
a blade guard coupled to the main body, wherein the blade guard is movable relative to the main body and includes a longitudinal slot configured to receive the knife blade.

12. The wire stripping and cutting tool of claim 11, further comprising a blade housing extending forward from the main body and surrounding at least a portion of the knife blade.

13. The wire stripping and cutting tool of claim 11, wherein the main body includes a gripping portion and a shield disposed between the gripping portion and the knife blade.

14. The wire stripping and cutting tool of claim 11, wherein the blade guard is pivotally coupled to the main body.

15. The wire stripping and cutting tool of claim 14, wherein the blade guard is rotatable between a stow position, an open position, and a cover position.

16. The wire stripping and cutting tool of claim 15, wherein the open position is rotationally between the stow position and the cover position.

17. The wire stripping and cutting tool of claim 15, wherein the blade guard is positioned at least partially within the main body when in the stow position, and wherein the blade guard covers at least a portion of the knife blade in the cover position.

18. A wire stripping and cutting tool comprising:
a main body;
a non-conductive knife blade extending from the main body; and
a blade guard pivotally coupled to the main body and rotatable between a stow position, an open position, and a cover position.

19. The wire stripping and cutting tool of claim 18, wherein the open position is rotationally between the stow position and the cover position.

20. The wire stripping and cutting tool of claim 18, wherein the blade guard is positioned at least partially within the main body when in the stow position, and wherein the blade guard covers at least a portion of the knife blade in the cover position.
